# EUROPEAN PATENT APPLICATION

(11) **EP 1 839 929 A2**
(43) Date of publication of application: **03.10.2007**
(21) Application number: 07104281.6
(22) Date of filing: 15.03.2007
(51) Int. Cl.: B60L 11/12

(54) **Vehicle drive control**

(30) Priority: 16.03.2006 JP 2006073114
(71) Applicant: Nissan Motor Co., Ltd., Kanagawa 221-0023 (JP)
(72) Inventor: Sugita, Yoshinori, c/o Nissan Technical Centre, Atsugi-shi Kanagawa 243-0192 (JP)
(74) Representative: Holmes, Matthew William

(57) **Abstract**

A vehicle drive control system including a motor brake control device. The motor brake control device causes an AC motor to generate a braking force, and selectively executes a first three-phase (3-phase) short-circuiting mode for simultaneously turning on switching elements of an upper arm of an inverter and a second 3-phase short-circuiting mode for simultaneously turning on switching elements of a lower arm of the inverter. The first 3-phase short-circuiting mode and the second 3-phase short-circuiting mode are selectively executed.

## Description

The present invention relates generally to vehicle drive control and particularly, but not exclusively, to a vehicle drive control system that drives a generator by an engine (*e.g.*, an internal combustion engine) for driving a main drive shaft, and drives an AC motor by an output of the generator. Aspects of the invention relate to an apparatus, to a device, to a system, to a method and to a vehicle.

Vehicle drive control system is known that drives a generator by an engine (*e.g.*, an internal combustion engine) for driving a main drive shaft, and drives an AC motor by an output of the generator. The drive control system has a function to generate a brake torque in order to suppress idling of the motor. Such a device is described in Japanese Patent Application No. 2006-14451.

When the motor is braked by short-circuiting the motor winding through use of an inverter, the switching elements of the inverter are heated and the resultant heat limits the motor braking range to a specific range or the lifetime consumption rates of the inverter.

It is an aim of the invention to address this issue and to improve upon known technology. Embodiments of the invention provide a drive control system for a vehicle which can solve the motor brake range limiting problem or the problem of lifetime consumption rates of the inverter. Other aims and advantages of the invention will become apparent from the following description, claims and drawings.

Aspects of the invention therefore provide an apparatus, a method and a vehicle as claimed in the appended claims.

According to another aspect of the invention there is provided a vehicle drive control system for a vehicle having a multi-phase AC motor for selectively driving auxiliary driven wheels, the vehicle drive control system comprising an inverter configured to supply electric power to the AC motor from the generator, the inverter having an upper arm comprising a first plurality of switching elements and a lower arm comprising a second plurality of switching elements and a motor brake control device configured to control the inverter to generate a braking force to decrease the rotation speed of the AC motor to a target rotation speed when a predetermined condition is met, wherein the motor brake control device selectively executes a first short-circuiting mode in which the first plurality of switching elements are simultaneously turned on and a second short-circuiting mode in which the second plurality of switching elements are simultaneously turned on.

In an embodiment, the motor brake control device switches the first short-circuiting mode and the second short-circuiting mode until the rotation speed of the AC motor reaches the target rotation speed.

In an embodiment, the motor brake control device includes a motor rotation speed detector that detects the rotation speed of the AC motor and the motor brake control device switches between the first short-circuiting mode and the second short-circuiting mode when an amount of decrease in rotation speed of the AC motor reaches a predetermined amount of decrease.

In an embodiment, the motor brake control device sets the predetermined amount of decrease on the basis of equal distribution of a difference between the current rotation speed and the target rotation speed.

In an embodiment, the motor brake control device comprises a temperature detector that detects or estimates temperatures of the switching elements of the inverter. The motor brake control device may switche between the first short-circuiting mode and the second short-circuiting mode when the temperatures of the selected switching elements of the inverter reach a predetermined temperature.

In an embodiment, the motor brake control device selects the first short-circuiting mode or the second short-circuiting mode when the predetermined condition is satisfied, and the motor brake control device executes the selected short-circuiting mode until the rotation speed of the AC motor reaches the target rotation speed.

In an embodiment, the motor brake control device selects a short-circuiting mode different from the short-circuiting mode executed in the previous motor brake control.

In an embodiment, the motor brake control device further comprises a temperature detector which detects or estimates temperatures of the switching elements of the inverter and a lifetime estimating unit which estimates lifetime consumption rates of the upper and lower arms of the inverter on the basis of the temperatures detected by the temperature detector, wherein the motor brake control device selects a short-circuiting mode in which the one of the first plurality of switching elements and the second plurality of switching elements having the smaller lifetime consumption rate as estimated by the lifetime estimating unit are simultaneously turned on.

In an embodiment, the motor brake control device further comprises a motor rotation speed detector that detects the rotation speed of the AC motor and a lifetime estimating unit that estimates the lifetime consumption rates of the upper and lower arms of the inverter on the basis of the rotation speed of the motor detected by the motor rotation speed detector, wherein the motor brake control device selects a short-circuiting mode in which the one of the first plurality of switching elements and the second plurality of switching elements having the smaller lifetime consumption rate as estimated by the lifetime estimating unit are simultaneously turned on.

In an embodiment, the temperature detector comprises a temperature sensor provided on at least one of the upper and lower arms of the inverter.

In an embodiment, the temperature detector comprises one temperature sensor provided at a mid point between the upper and lower arms of the inverter.

In an embodiment, the temperature detector comprises a current sensor which detects current of at least one of the upper and lower arms of the inverter.

In an embodiment, the motor brake control device controls current in a field coil of the AC motor during motor brake control.

According to a further aspect of the invention there is provided a motor control device for controlling a multi-phase AC motor by controlling an inverter connected to the AC motor, comprising a motor brake control device which selectively executes a first short-circuiting mode in which switching elements of an upper arm of the inverter are simultaneously turned on and a second short-circuiting mode in which switching elements of a lower arm of the inverter are simultaneously turned on during motor brake control.

According to a still further aspect of the invention there is provided a vehicle comprising an engine for driving main driving wheels, a generator driven by the engine, a multi-phase AC motor for selectively driving auxiliary driven wheels, an inverter configured to supply electric power to the AC motor from the generator, the inverter having an upper arm comprising a first plurality of switching elements and a lower arm comprising a second plurality of switching elements and a motor brake control means for controlling the inverter to generate a braking force to decrease the rotation speed of the AC motor to a target rotation speed when a predetermined condition is met, the motor brake control means selectively executes a first short-circuiting mode in which the first plurality of switching elements are simultaneously turned on and a second short-circuiting mode in which the second plurality of switching elements are simultaneously turned on.

According to a still further aspect of the invention there is provided a method for drive control of a vehicle having an engine for driving main driving wheels, a generator driven by the engine, a multi-phase AC motor for selectively driving auxiliary driven wheels, and an inverter configured to supply electric power to the AC motor from the generator, the inverter having an upper arm comprising a first plurality of switching elements and a lower arm comprising a second plurality of switching elements, the method comprising detecting when a predetermined condition is met, upon detection of the predetermined condition, selectively executing a first short-circuiting mode in which the first plurality of switching elements are simultaneously turned on and a second short-circuiting mode in which the second plurality of switching elements are simultaneously turned on and continuing the selective execution until the rotation speed of the AC motor decreases to a target rotation speed.

For example, a vehicle drive control system may including a motor brake control device arranged to cause an AC motor to generate a braking force, and to execute a first three-phase (3-phase) short-circuiting mode for simultaneously turning on switching elements of an upper arm of an inverter and a second 3-phase short-circuiting mode for simultaneously turning on switching elements of a lower arm of the inverter.

The first 3-phase short-circuiting mode and the second 3-phase short-circuiting mode may be selectively executed. This may solve the motor brake range limiting problem and/or level the lifetime consumption rates of the switching elements of the inverter by means of the upper and lower arms.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:
FIG. 1 is a diagram schematically showing an embodiment of the present invention;
FIG. 2 is a block diagram showing the details of a motor control in accordance with an embodiment of the invention;
FIG. 3 is a circuit diagram showing an inverter and its peripheral circuit in accordance with an embodiment of the invention;
FIG. 4 is a circuit diagram showing a field reduction circuit in accordance with an embodiment of the invention;
FIG. 5 is a circuit diagram showing another field reduction circuit in accordance with an embodiment of the invention;
FIG. 6 is a flow chart showing a processing flow of a motor brake control process in a first embodiment of the present invention;
FIG. 7 is a timing chart showing operations of the first embodiment;
FIG. 8 is a flow chart showing a processing flow of a motor brake control process in a second embodiment of the present invention;
FIG. 9 is a timing chart showing operations of the second embodiment;
FIG. 10 is a flow chart showing a processing flow of a motor brake control process in a third embodiment of the present invention;
FIG. 11 is a flow chart showing a processing flow of a motor brake control process in a fourth embodiment of the present invention; and
FIG. 12 is a flow chart showing a calculating flow of a process for calculating the lifetime consumption rates of arms of an inverter.

Detailed embodiments of the invention will be described with reference to the accompanying drawings. Like elements are referenced with like numeral for consistency throughout the drawings.

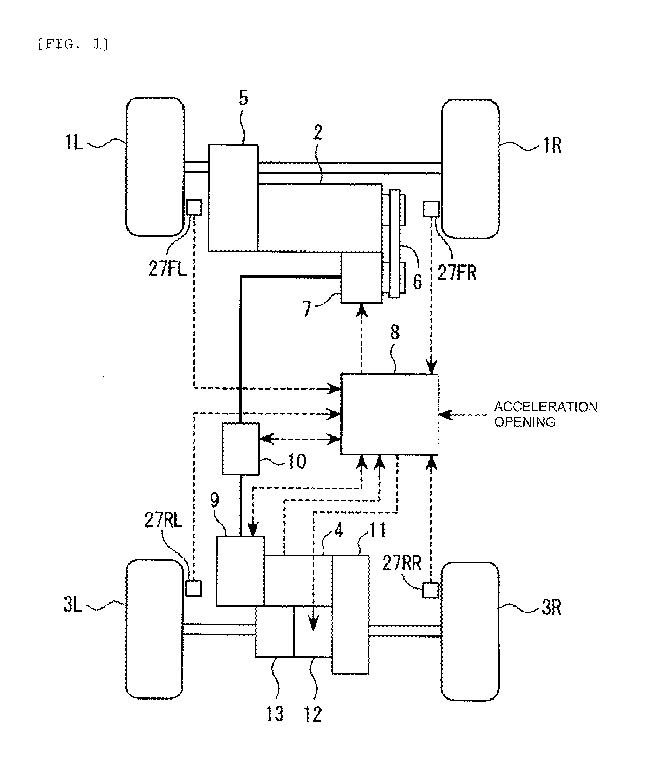

FIG. 1 is a schematic diagram illustrating an embodiment of the invention applied to a four-wheel drive vehicle. As shown, right and left front wheels 1L and 1R are main driving wheels driven by an engine 2 serving as a heat engine (internal combustion engine), and right and left rear wheels 3L and 3R are auxiliary driven wheels that can be driven by a motor 4.

For example, a main throttle valve and a sub-throttle valve are incorporated into the intake pipeline of the engine 2. The throttle opening of the main throttle valve is adjusted according to of the degree of actuation of an accelerator pedal, or the like. The opening of the sub-throttle valve is controlled in accordance with a rotation angle, which depends on the number of steps of a stepping motor or the like as an actuator. Accordingly, the output torque of the engine may be reduced independently of the acceleration pedal operation by the driver, in such a manner that the throttle opening of the sub-throttle valve is set to be below the opening of the main throttle value. That is, through the opening adjustment of the sub-throttle valve, a driving force is controlled so as to suppress the acceleration slip of the right and left front wheels 1L and 1R, caused by the engine 2.

An output torque Te of the engine 2 is transmitted to the right and left front wheels 1L and 1R through a transmission and a differential gear 5. Part of the output torque Te of the engine 2 is transmitted through an endless belt 6 to a generator 7. The generator 7 rotates at a rotation speed Ng obtained by multiplying the engine speed Ne of the engine 2 by a pulley ratio.

The generator 7 is provided with a regulator for regulating electric power generated thereby. The regulator controls a field current lfg of the generator according to power generation control instruction from a 4WD controller 8, and the generator serves as a load torque to the engine 2. The generator generates electric power depending on the load torque. The magnitude of the electric power generated by the generator 7 is determined by the rotation speed Ng and the amplitude of the field current lfg. The rotation speed Ng of the generator 7 can be calculated from the engine speed Ne of the engine 2 on the basis of a pulley ratio.

The electric power generated by the generator 7 may be supplied to the motor 4 through a junction box 10 and an inverter 9. A drive shaft of the motor 4 may be connected to the right and left rear wheels 3L and 3R through a reduction gear mechanism 11 and a clutch 12. The motor 4, in this embodiment, is an AC motor of the field winding type, which includes a field winding and an armature winding. In the figure, reference numeral 13 designates a differential gear.

A relay for connecting and disconnecting the inverter 9 to and from the generator 7 is contained in the junction box 10. DC power, which is supplied through a rectifier (not shown) from the generator 7 when the relay is connected, is converted into 3-phase AC in the inverter 9, and is supplied to the motor 4 to drive the motor.

The junction box 10 also contains a generator voltage sensor for sensing power voltage and a generator current sensor for sensing power current that is input to the inverter 9. Detection signals from these sensors are output to the 4WD controller 8. A motor resolver is coupled to the drive shaft of the motor 4, and outputs a magnetic pole position signal θ of the motor 4. In this embodiment, the motor resolver is motor rotation speed detecting means, which calculates the rotation speed Nm of the motor from the magnetic pole position signal θ.

The clutch 12 is, for example, a multi-plate wet clutch that is engaged and released in accordance with a command from the 4WD controller 8. The clutch may also be, for example, a powder clutch or a pump clutch.

The wheels 1L 1R, 3L and 3R are provided with wheel speed sensors 27FL, 27FR, 27RL and 27RR, respectively. The wheel speed sensors 27FL, 27FR, 27RL and 27RR, respectively, produce pulse signals, which represent rotation speeds of the corresponding wheels 1L, 1R, 3L and 3R, and send the pulse signals as wheel speed detection values to the 4WD controller 8.

The 4WD controller 8 includes an operation processing unit such as a micro-computer. The operation processing unit receives the wheel speed signals detected by the wheel speed sensors 27FL to 27RR, the output signals from the voltage sensor and the current sensor in the junction box 10, an output signal of the resolver coupled to the motor 4, and a signal representative of an acceleration opening corresponding to the actuation amount of the acceleration pedal (not shown). The 4WD controller 8 executes a known front wheel traction control and a clutch control for engaging the clutch 12 during the 4-wheel drive mode.

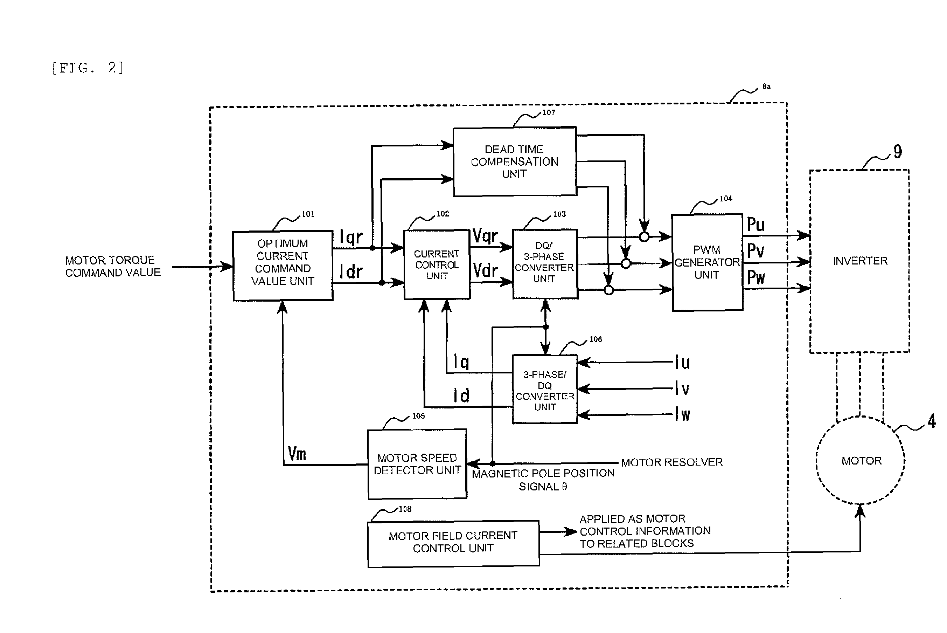

The 4WD controller 8 calculates a motor torque command value from a wheel speed difference between the front and rear wheels, which is calculated from the wheel speed signals of the four wheels, and the acceleration opening signal. The 4WD controller 8 executes power generation control for controlling the field current of the generator 7 according to the calculated motor torque command value. Further, the 4WD controller 8 executes a known vector control, shown in FIG. 2, in accordance with the motor torque command value and the motor rotation speed, and outputs a switching control signal for the 3-phase power elements to the inverter 9 to thereby control the 3-phase AC current.

FIG. 2 is a block diagram showing an embodiment of a motor control circuit 8a for controlling the motor 4 by the inverter 9. The motor control circuit 8a controls the motor 4 by using the inverter 9 in accordance with a torque command value. The torque command value is calculated from an input signal such as an acceleration opening.

The motor control circuit 8a is provided in the 4WD controller 8, and includes an optimum current command value unit 101, a current control unit 102, a dq/3-phase converter unit 103, a PWM generator unit 104, a motor speed detector unit 105, a 3-phase/dq converter unit 106, a dead time compensation unit 107, and a motor field current control unit 108. The motor control circuit 8a controls the torque of the motor 4 in accordance with a torque command value input thereto.

The optimum current command value unit 101 receives a torque command value, and calculates command values ldr and lqr of a d-axis (magnetic flux component) current and a q-axis (torque component) current, which are for outputting the torque indicated by the torque command value, and outputs the resultant to the current control unit 102.

The 3-phase/dq converter unit 106 converts a U-phase current Iu, a V-phase current lv and a W-phase current lw detected by the motor 4 to a d-axis current value ld and a q-axis current value lq in accordance with the magnetic pole position signal θ detected by the motor resolver, and outputs those current values to the current control unit 102.

The current control unit 102 calculates a d-axis voltage command value Vdr and a q-axis voltage command value Vqr for converting the q-axis current value ld and the q-axis current value Iq output from the 3-phase/dq converter unit 106 to the command values ldr and lqr output from the optimum current command value unit 101, and outputs the resultant to the dq/3-phase converter unit 103.

The dq/3-phase converter unit 103 converts the d-axis voltage command value Vdr and the q-axis voltage command value Vqr to a U-phase voltage command value Vur, a V-phase voltage command value Vvr and a W-phase voltage command value Vwr in accordance with the magnetic pole position signal θ of the motor 4, and outputs the resultant to the PWM generator unit 104.

The dead time compensation unit 107 calculates a voltage for making a current compensation corresponding to a dead time, and adds it to the U-phase voltage command value Vur, the V-phase voltage command value Vvr and the W-phase voltage command value Vwr.

The PWM generator unit 104 generates a switching signal to be output to the inverter 9, on the basis of the U-phase voltage command value Vur, the V-phase voltage command value Vvr and the W-phase voltage command value Vwr. The inverter 9 generates a voltage based on the switching signal and applies it to the motor 4, thereby executing motor control for controlling the 3-phase AC current of the armature winding 4a of the motor 4.

The motor field current control unit 108 generates a command value of a field current of the motor 4 according to the torque command value, and controls a motor field driving circuit 90 to be described later to control a field current of the field coil 4b of the motor 4.

Although a specific embodiment of a motor controller 8a has been described as one part of a 4WD controller 8, alternate types of controllers may be used for the motor controller 8a without departing from the scope of the invention.

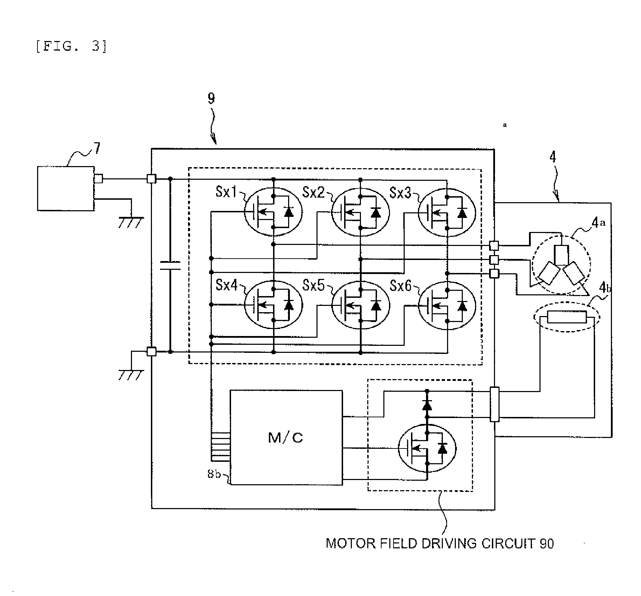

FIG. 3 is a circuit diagram showing an embodiment of the inverter 9 and its peripheral circuits. The inverter 9 contains six switching elements (MOSFET) Sx1 to Sx6. The switching elements Sx1 to Sx3 form an upper arm of the inverter, and the switching elements Sx4 to Sx6 form a lower arm.

According to a switching signal from a M/C 8b, the switching elements Sx1 to Sx6 control the current of the armature winding 4a of the motor 4.

The motor field control circuit 90 controls the current of the field coil 4b of the motor 4 according to a switching signal from the M/C 8b. ln this case, the motor field control circuit 90 is a part of the inverter 9; however, it may be a part of the motor 4.

The M/C 8b, provided adjacent to the inverter 9, is a controller for generating a drive voltage for the switching elements in response to the switching signal and the command value of a field current of the motor 4 from the motor control circuit 8a or the 4WD controller 8.

Furthermore, the 4WD controller 8 issues to the M/C 8b a 3-phase short-circuiting command for simultaneously turning on the switching elements of the upper and lower arms of the inverter 9 when a predetermined condition (4-wheel drive mode stop condition) holds. By executing the 3-phase short-circuiting command, a motor brake control is executed to cause the motor 4 to generate a braking force and to reduce the rotation speed of the motor to a target rotation speed (a motor brake control device, motor brake control means).

In the 3-phase short-circuiting mode, the switching elements Sx1 to Sx3 of the upper arm of the inverter are all put in the on state, while at the same time the switching elements Sx4 to Sx6 of the lower arm are all put in the off state. Consequently, the currents of the 3-phase terminals of the motor 4 flow through all the switching elements Sx1 to Sx3 and the diodes associated with those switching elements (first 3-phase short-circuiting mode). When the switching elements Sx1 to Sx3 of the upper arm of the inverter are all turned off, while at the same time the switching elements Sx4 to Sx6 of the lower arm are all turned on, the currents of the 3-phase terminals of the motor 4 flow through all the switching elements Sx4 to Sx6 and the diodes associated with those switching elements (second 3-phase short-circuiting mode).

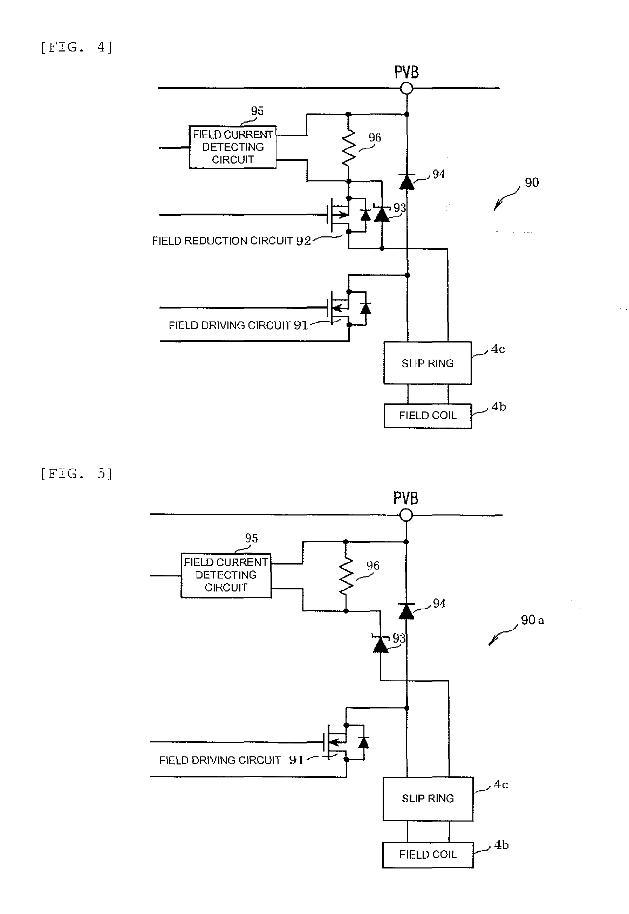

FIG. 4 is a circuit diagram showing an embodiment of the motor field control circuit 90. The motor field control circuit 90 includes a field driving circuit 91, a field reduction circuit 92, a zener diode 93, a commutation current diode 94, a field current detecting circuit 95, and a resistor 96. The motor field control circuit 90 controls current flowing through a slip ring 4c to the field coil 4b. The field driving circuit 91 controls the field current by operating the MOSFET according to a control signal coming from the M/C 8b. The field reduction circuit 92 operates when a field current reducing operation to be described later is performed. The resistor and the zener diode, which are provided in a commutation path set up when the driving signal of the field driving circuit 91 is stopped, rapidly convert the energy to be transformed into commutation current into loss, to thereby reduce the field current.

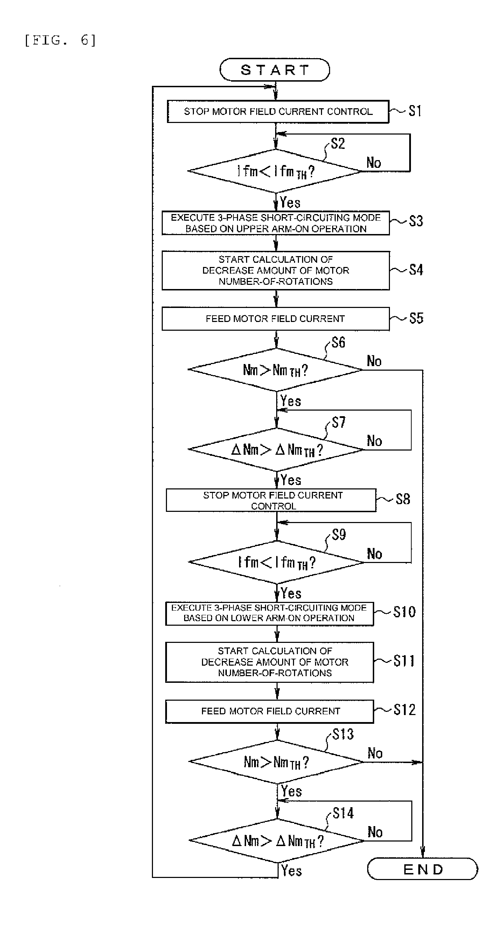

FIG. 5 shows another embodiment of the motor field control circuit 90 of FIG. 3. When the motor field control circuit 90a of FIG. 5 is used, the field current is reduced in such a manner that the driving signal of the field driving circuit 91 is stopped, and the energy is gradually converted into loss through the loss (commutation diode and wiring resistance) of the commutation path. In another example, an H bridge structure may be used. When the driving signal of the field driving circuit 91 is stopped, a reverse voltage is applied, and a voltage induced by an inductance of the current path is cancelled to offset the energy to be transformed into the commutation current. In this embodiment, the "field reduction" is realized by stopping the driving signal of the field driving circuit 91 or by both stopping the driving signal of the field driving circuit 91 and operating the field reduction circuit 92.

Further, when a predetermined condition (4-wheel drive mode stop condition) holds, the 4WD controller 8 may feed a predetermined field current to the field coil 4b by operating the field driving circuit 91 and the field reduction circuit 92 against the M/C 8b. Execution of such a command enhances the performance of the motor brake control using the 3-phase short-circuiting mode.

FIG. 6 is a flow chart showing a process flow of a motor brake control process to be executed by the 4WD controller 8 in accordance with an embodiment of the invention. The motor brake control process is executed when the 4-wheel drive mode stop condition holds.

In step S1, the 4WD controller 8 stops the motor field current control. Specifically, the 4WD controller 8 stops the inverter gate Sx1 to Sx6 and the switching of the motor field driving circuit 91. Further, the 4WD controller 8 turns on the field reduction circuit 92 to reduce the field current.

In the next step S2, the 4WD controller 8 determines whether a motor field current lfm is smaller than a motor field current threshold value Ifm_{TH} (0A, for example). If Ifm < IFm_{TH}, the 4WD controller advances to step S3. If Ifm ≥ Ifm_{TH}, the controller 8 repeats the step S2.

ln step S3, the 4WD controller 8 turns on the upper arm switching elements (this turn-on state will be referred to as "upper arm-on") and executes the 3-phase short-circuiting mode. In this case, although the initial value is the upper arm, it may be the lower arm if required.

In step S4, the 4WD controller 8 starts to calculate an amount of decrease ΔNm of the motor rotation speed Nm after the 3-phase short-circuiting mode based on the upper arm-on.

In step S5, the 4WD controller 8 feeds the motor field current Ifm and sets a target current value to a target current value Ifm1 (10A, for example) of the 3-phase short-circuiting mode.

In step S6, the 4WD controller 8 determines whether the current motor rotation speed Nm is larger than a stop determining threshold value Nm_{TH} (1000 rpm, for example), which is a target rotation speed in the motor brake control. If Nm ≤ Nm_{TH}, the 4WD controller determines that the operation of the motor brake control is to be stopped, and ends the motor brake control process. If Nm > Nm_{TH}, on the other hand, the controller proceeds to step S7.

ln step S7, the 4WD controller 8 determines whether the amount of motor rotation speed decrease ΔNm is larger than a decrease amount threshold value ΔNm_{TH} (1000 rpm, for example). If ΔNm > ΔNm_{TH}, the controller advances to step S8. If ΔNm ≤ ΔNm_{TH}, the controller repeats the step S7.

ln this case, the decrease amount threshold value ΔNm_{TH} is fixed. If required, the decrease amount threshold value ΔNm_{TH} may be calculated from a difference between the current rotation speed of the motor and the stop determining threshold value ΔNm_{TH}, serving as a target number of rotations to stop the motor brake control, such that the number of current feeding times for the upper arm is equal to that for the lower arm. In this embodiment, the decrease amount threshold value ΔNm_{TH} is set to be within a range from 500 rpm to 1000 rpm. By so setting, the temperature rise of the switching elements of the inverter in the upper arm is equal to that in the lower arm. As a result, the lifetime consumption rates of the switching elements of the upper and lower arms are leveled.

In step S8, the 4WD controller 8 stops the motor field current control, as in step S1. Specifically, the controller 8 stops the inverter gate Sx1 to Sx6 and the switching of the motor field driving circuit 91, and turns on the field reduction circuit 92 to reduce the field current.

In step S9, the 4WD controller 8 determines whether the motor field current Ifm is smaller than motor field current threshold value Ifm_{TH}, as in step S2. lf Ifm < Ifm_{TH}, the controller advances to a step S10. lf Ifm ≥ Ifm_{TH}, the controller repeats step S9.

In step S10, the 4WD controller 8 turns on the lower arm switching elements (this turn-on operation will be referred to as "lower arm-on") and executes the 3-phase short-circuiting mode.

In step S11, the 4WD controller 8 starts the 3-phase short-circuiting mode based on the lower arm-on, and calculates a decrease amount ΔNm of the motor rotation speed Nm.

In step S12, the 4WD controller 8 feeds the motor field current Ifm and sets a target current value at the target current value Ifm1 of the 3-phase short-circuiting mode.

In step S13, the 4WD controller 8 determines whether the motor rotation speed Nm is larger than the stop determining threshold value Nm_{TH} in the motor brake control. If Nm ≤ Nm_{TH}, the 4WD controller 8 determines that the operation of the motor brake control is to be stopped, and ends the motor brake control process. If Nm > Nm_{TH}, the controller advances to step s14.

In the step S14, the 4WD controller 8 determines whether the amount of decrease in motor rotation speed ΔNm is larger than the decrease amount threshold value ΔNm_{TH}. If ΔNm > ΔNm_{TH}, the controller proceeds the step S1. If ΔNm ≥ ΔNm_{TH}, the controller repeats the step S14.

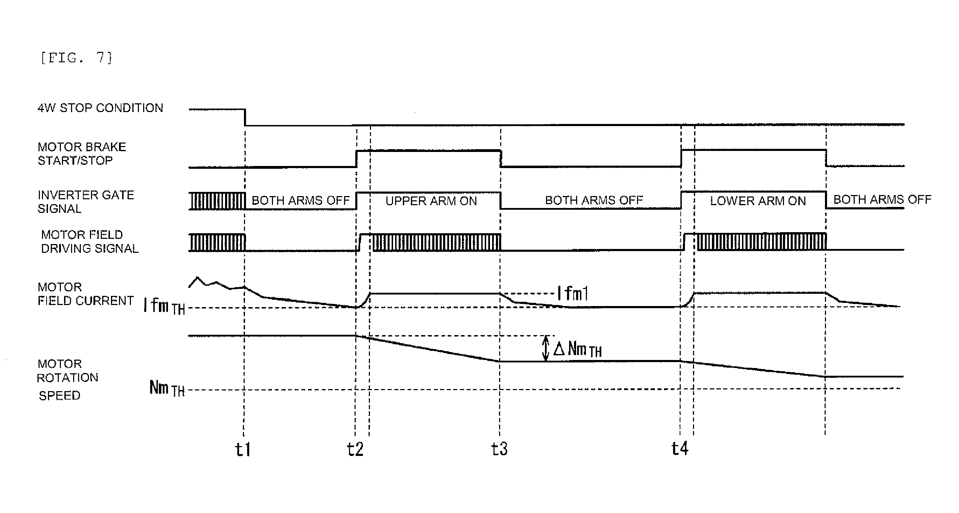

Operation of the first embodiment of the invention will be described with reference to the timing chart shown in FIG. 7.

It is assumed that the 4-wheel drive mode stop condition is held at time t1 for the reason, for example, that no acceleration slip occurs in the front wheels. In this case, the 4WD controller 8 executes the motor brake control process shown in FIG. 6 and stops the motor field driving circuit in the step S1. The field reduction circuit is turned on to reduce the motor field current and, consequently, the motor field current Ifm gradually decreases.

When the motor field current Ifm becomes smaller than the motor field current-threshold value Ifm_{TH} at time t2, the controller 8 executes the step S3 to turn on the switching elements Sx1 to Sx3 of the upper arm and to turn off the switching elements Sx4 to Sx6 of the lower arm, and starts the 3-phase short-circuiting mode in which the current is fed to the switching elements of the upper arm. At this time, the re-feeding of the motor field current causes the motor field current, which is based on motor brake torque (motor deceleration) in the 3-phase short-circuiting mode, to increase to the target current value Ifm1.

Thereafter, the motor rotation speed Nm gradually decreases, and at time t3, the amount of decrease in motor rotation speed ΔNm reaches the decrease amount threshold value ΔNm_{TH}. Then, the 4WD controller 8 advances to step S8 on the basis of the determination in the step S7. In this step, the controller 8 stops the motor field driving circuit to reduce the motor field current. At this time, the switching elements of both the upper and lower arms are in an off state.

When the first 3-phase short-circuiting mode (upper arm-on operation) is switched to the second 3-phase short-circuiting mode (lower arm-on operation) and vice versa, the operation is made so that the following state always occurs: the switching elements of the upper arm are turned off (this state will be referred to as "upper arm-off"), and the switching elements of the lower arm are turned off (this state will be referred to as "lower arm-off"). This operation is made to avoid damage to the power module.

As a result of reducing the motor field current, the motor field current Ifm gradually decreases from the target current value Ifm1 and becomes smaller than the motor field current-threshold value Ifm_{TH} at time t4. Then, the controller turns on the switching elements Sx4 to Sx6 of the lower arm and turns off the switching elements Sx1 to Sx3 of the upper arm (step S10). The controller starts the 3-phase short-circuiting mode, in which current is fed to the switching elements of the lower arm.

Thus, when the 4-wheel drive mode stop condition is held, the controller executes the 3-phase short-circuiting mode of the inverter 9 to cause the motor 4 to generate a braking force. At this time, the 3-phase short-circuiting control is executed by alternately switching between the 3-phase short-circuiting mode based on the upper arm-on and the 3-phase short-circuiting mode based on the lower arm-on in accordance with the amount of decrease in motor rotation speed. The control is repeated until the motor rotation speed Nm is below the stop determining threshold value Nm_{TH}.

In the drive control system as shown in FIG. 1, the AC motor and the inverter form a driving system wherein the AC motor drives the rear wheels and the clutch is located between the rear wheels and the AC motor. When the 4-wheel drive mode stop condition holds, for example, because of no acceleration off state and no front wheel slip, and the clutch is turned off, the load of the motor output shaft is removed. As a result, a lag occurs in the decrease of motor rotation speed. Therefore, sound associated with motor rotation continues after the 4-wheel drive mode is stopped, and a time lag occurs until the next 4-wheel drive mode starts.

A possible solution to this problem is to cause the motor to generate a regeneration torque to decrease the motor rotation speed. The drive control system in accordance with this embodiment of the invention is not provided with a battery for driving the motor 4. Accordingly, the drive control system cannot perform the regeneration operation as a normal HEV (hybrid electric vehicle) does. It is for this reason that the 3-phase short-circuiting mode is executed to cause the motor to generate a braking force to decrease motor rotation speed. In the 3-phase short-circuiting mode, the switching elements of one of the upper and lower arms are turned on, while those of the other arm are turned off. If, in the 3-phase short-circuiting mode, the switching elements of only one of the upper and lower arms are always turned on, only those switching elements are heated. Thus, those elements terminate earlier than those of the other arm, resulting in reduction of the lifetime of the inverter.

On the other hand, in the embodiment described above, in the 3-phase short-circuiting mode, the 3-phase short-circuiting mode based on the upper arm-on and that based on the lower arm-on are alternately switched. Accordingly, the lifetime consumption rates of the switching elements of the upper and lower arms of the inverter are leveled, leading to increase of the lifetime of the inverter.

In the 3-phase short-circuiting mode, the switching elements of the arm to which the current is fed are in an on state, and a large amount of current flows through the switching elements. Accordingly, temperature rises rapidly at the start of the motor brake control. In the case of a 3-phase short-circuiting mode where only the switching elements of one of the arms are used, the initial temperature of the inverter must be low before the motor brake control starts in order to avoid reaching upper limit temperature of the switching elements.

In the embodiment described above, the upper arm-on and lower arm-on 3-phase short-circuiting modes are alternately switched, once the 4-wheel drive mode stop condition holds, until the rotation speed of the motor reaches the target rotation speed. Therefore, the temperature rise of the switching elements is shared by the upper and lower arms, which makes it possible to suppress the temperature rise of any single element. As a result, the initial temperature of the inverter before the motor brake control starts can be higher without causing temperature problems. Accordingly, the temperature range allowing the 3-phase short-circuiting mode to be executed is expanded to include higher temperatures.

Thus, in the first embodiment, the first 3-phase short-circuiting mode in which the switching elements of the upper arm of the inverter are simultaneously turned on, and the second 3-phase short-circuiting mode in which the switching elements of the lower arm of the inverter are simultaneously turned on, are executed while being switched. Accordingly, the lifetime consumption rates of the switching elements of the upper and lower arms of the inverter are leveled, leading to increase of the lifetime of the inverter.

Furthermore, when an amount of decrease in the rotation speed of the AC motor reaches a predetermined amount, the first 3-phase short-circuiting mode and the second 3-phase short-circuiting mode are switched one from the other. Accordingly, the temperature rise of the switching elements is shared by the upper and lower arms.

A second embodiment of the present invention will be described below. In this embodiment, the 3-phase short-circuiting mode by the upper arm and that by the lower arm are switched depending on temperature rise of the switching elements.

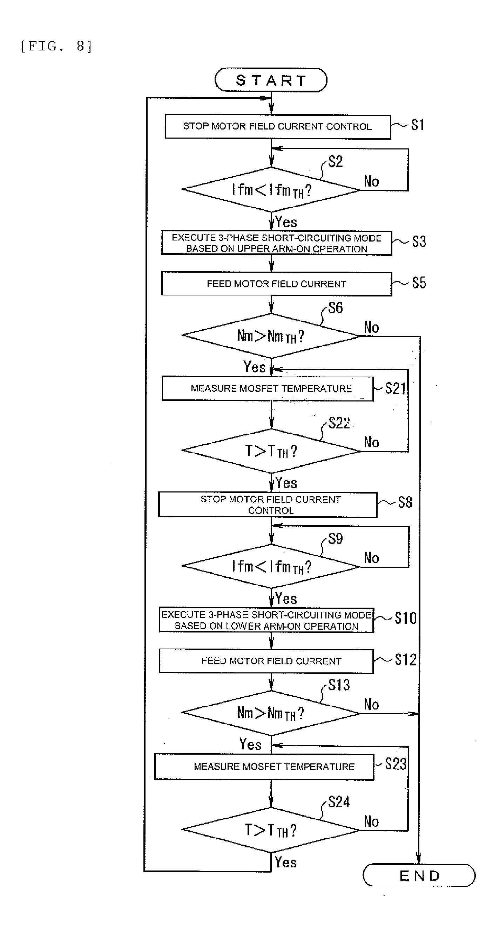

FIG. 8 is a flow chart showing a process flow of a motor brake control process executed by the 4WD controller 8 in the second embodiment. In the figure, like reference numerals are used for designating like portions of the motor brake control process of the first embodiment shown in FIG. 6, and description will be given placing emphasis on the portions that are not found in the process of the first embodiment.

When in step S6, the 4WD controller 8 determines that Nm > ΔNm_{TH}, the controller proceeds to step S21. ln step S21, temperature of the switching elements of the arm, which are in an on state, is measured. The temperature of the switching elements is measured using one of temperature sensors serving as temperature detecting means, which are provided on the upper and lower arms, respectively.

In step S22, the 4WD controller 8 determines whether the temperature T of the switching elements measured in step S21 is higher than a predetermined temperature threshold value T_{TH} (100°C, for example). If T > T_{TH}, the 4WD controller 8 proceeds to step S8. If T ≤ T_{TH}, the controller repeats step S21 and step S22.

When in step S13, the 4WD controller 8 determines that Nm > ΔNm_{TH}, the controller proceeds to step S23. ln step S23, the temperature of the switching elements of the arm that are in an on state is measured. The temperature of the switching elements is measured using one of temperature sensors provided on the upper and lower arms, respectively.

In step S24, the 4WD controller 8 determines whether the temperature T of the switching elements measured in the step S21 is higher than a predetermined temperature threshold value T_{TH}. If T > T_{TH}, the 4WD controller proceeds to step S1. If T ≤ T_{TH}, the controller repeats step S23 and step S24.

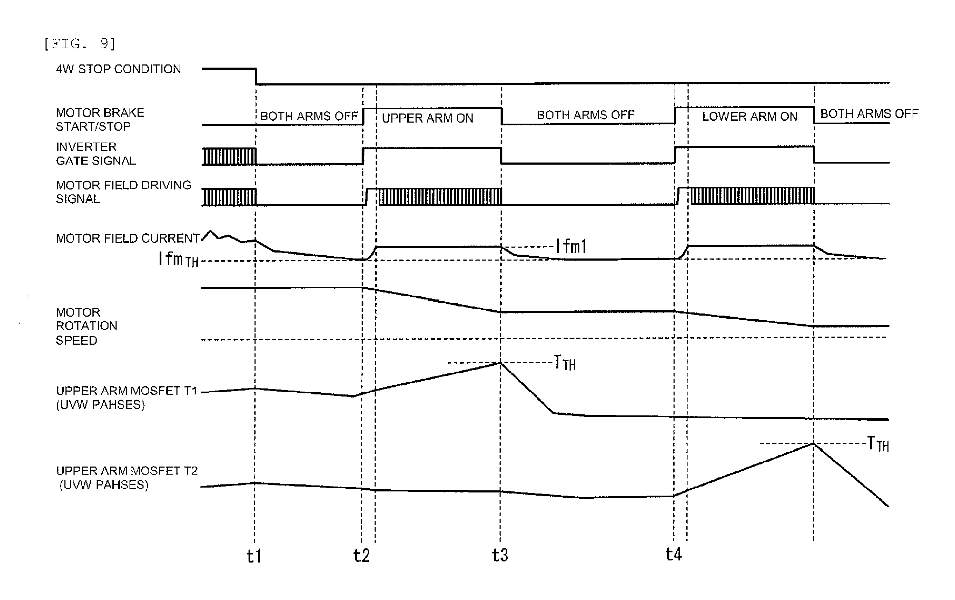

Operation of the second embodiment of the invention will be described with reference to a timing chart shown in FIG. 9.

It is assumed that the 4-wheel drive mode stop condition holds at time t1 for the reason that, for example, no acceleration slip occurs in the front wheels. In this case, the 4WD controller 8 executes the motor brake control process shown in FIG. 8 and stops the motor field driving circuit in the step S1. The field reduction circuit is turned on to reduce the motor field current, and consequently, the motor field current Ifm gradually decreases.

When the motor field current Ifm becomes smaller than the motor field current-threshold value Ifm_{TH} at time t2, the controller executes step S3 to turn on the switching elements Sx1 to Sx3 of the upper arm and to turn off the switching elements Sx4 to Sx6 of the lower arm, and starts the 3-phase short-circuiting mode. At this time, the re-feeding of the motor field current increases the motor field current, which is based on a motor brake torque (motor deceleration) in the 3-phase short-circuiting mode, to the target current value Ifm1.

Thereafter, the temperature T1 of the switching elements of the upper arm gradually rises, and at time t3, the temperature T1 reaches the temperature threshold value T_{TH}. At this time, the 4WD controller advances to step S8 on the basis of the determination in step S22 to stop the motor field driving circuit 90 and to reduce the motor field current. Consequently, the motor field current Ifm gradually decreases from the target current value Ifm1 and becomes smaller than the motor field current-threshold value Ifm_{TH} at time t4. Then, the controller turns on the switching elements Sx4 to Sx6 of the lower arm and turns off the switching elements Sx1 to Sx3 of the upper arm (step S10). In this manner, the controller starts the 3-phase short-circuiting mode.

When the 4-wheel drive mode stop condition thus holds, the controller executes the 3-phase short-circuiting mode of the inverter to cause the motor 4 to generate a braking force. At this time, the 3-phase short-circuiting control is executed by alternatively switching between the 3-phase short-circuiting mode based on the upper arm-on and the 3-phase short-circuiting mode based on the lower arm-on in accordance with temperature rise of the switching elements. The control is repeated until the motor rotation speed Nm falls below the stop determining threshold value Nm_{TH}.

In the second embodiment, the controller switches between the first 3-phase short-circuiting mode and the second 3-phase short-circuiting mode when the temperature of the switching elements of the inverter reaches a predetermined temperature. Therefore, the temperature rise of the switching elements is shared by the upper and lower arms, which makes it possible to suppress the temperature rise of any one element. Accordingly, the temperature range allowing the 3-phase short-circuiting mode to be executed is expanded to include higher temperatures.

Further, since the temperature sensors are placed on the upper and lower arms of the inverter, the temperature of the switching elements of the upper and lower arms can be measured with high accuracy.

A third embodiment of the present invention will be described.

As already described in the first and second embodiments, the first 3-phase short-circuiting mode and the second 3-phase short-circuiting mode are alternately switched until the rotation speed of the motor reaches the target rotation speed after the 4-wheel drive mode stop condition holds. In the third embodiment, the first 3-phase short-circuiting mode and the second 3-phase short-circuiting mode are switched every time the motor brake control is performed.

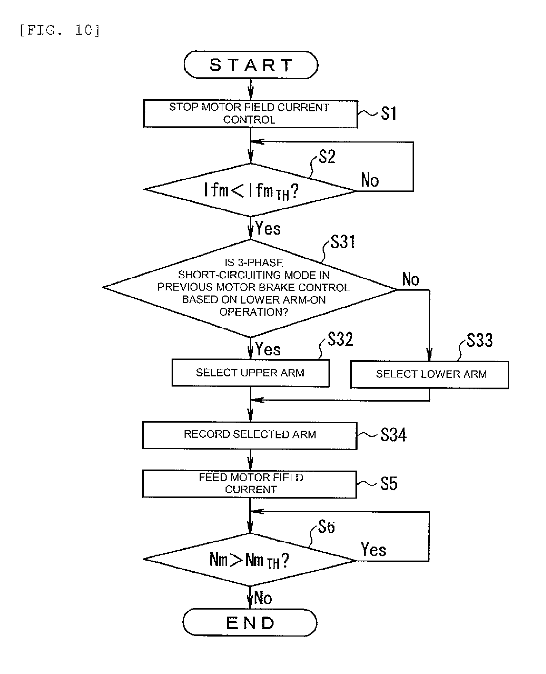

FIG. 10 is a flow chart showing a process flow of a motor brake control process to be executed by the 4WD controller 8 in the third embodiment. In the figure, like reference numerals are used for designating like portions of the motor brake control process of the first embodiment shown in FIG. 4, and description will be given placing emphasis on the portions which are not found in the process of the first embodiment.

In step S31, the 4WD controller 8 determines whether the 3-phase short-circuiting mode based on the lower arm-on has been performed in the previous motor brake control. If the 3-phase short-circuiting mode is based on the lower arm-on, the controller advances to step S32 where the controller executes the 3-phase short-circuiting mode based on the upper arm-on.

When in step S31, the 3-phase short-circuiting mode is based on the upper arm-on, the controller advances to step S33 where the controller executes the 3-phase short-circuiting mode based on the upper arm-on.

One of the upper arm and the lower arm is preset as an initial value of the selected arm. In this embodiment, the upper arm is set as the initial value.

In step S34, the 4WD controller 8 records the arm selected in step S32 or S33 in a memory. The selected arm recorded is retained even after the ignition switch is turned off.

Operation of the third embodiment of the invention will be described.

It is assumed that the 4-wheel drive mode stop condition holds for the reason that, for example, no acceleration slip occurs in the front wheels. In this case, the 4WD controller 8 executes the motor brake control process shown in FIG. 10 and stops the motor field driving circuit in the step S1. The field reduction circuit is turned on to reduce the motor field current and, consequently, the motor field current Ifm gradually decreases.

When the motor field current Ifm becomes smaller than the motor field current-threshold value Ifm_{TH}, the controller turns on the switching elements Sx1 to Sx3 of the upper arm and turns off the switching elements Sx4 to Sx6 of the lower arm, and starts the 3-phase short-circuiting mode. At this time, the re-feeding of the motor field current increases the motor field current, which is based on motor brake torque (motor deceleration) in the 3-phase short-circuiting mode, to the target current value Ifm1. When the motor rotation speed Nm falls below the stop determining threshold value Nm_{TH}, the controller stops the 3-phase short-circuiting mode on the basis of the determination in the step S6.

It is assumed that the vehicle operation state has shifted from this state to the 4-wheel drive mode and the 4-wheel drive mode stop condition holds again. The answer to step S31 is NO, and then step S33 is executed. As a consequence, the 3-phase short-circuiting mode starts in which the switching elements Sx4 to Sx6 of the lower arm are turned on, and the switching elements Sx1 to Sx3 of the upper arm are turned off.

When the 4-wheel drive mode stop condition thus holds, the inverter 9 is operated in the 3-phase short-circuiting mode to cause the motor 4 to generate a braking force. At this time, the upper arm and the lower arm are alternately switched for the arm to be fed with current (referred to be current-fed arm) every the motor brake control.

Thus, in the third embodiment, the first 3-phase short-circuiting mode or the second 3-phase short-circuiting mode is selected every time the motor brake control is performed. The 3-phase short-circuiting mode based on the selected short-circuiting method is performed until the rotation speed of the motor reaches the target rotation speed. Accordingly, the lifetime consumption rates of the switching elements of the upper and lower arms of the inverter are leveled, leading to increase of the lifetime of the inverter.

Further, in the disclosed motor brake control, a short-circuiting method is described that is different from that in preceding motor brake controls. Accordingly, the lifetime consumption rates of the switching elements of the upper and lower arms of the inverter can be leveled and increased.

A fourth embodiment of the present invention will be described.

In the third embodiment, the current-fed arm selected in the succeeding motor brake control is different from that in the preceding motor brake control. That is, when the former is the upper arm, the latter is the lower arm. In the fourth embodiment, the current-fed arm is selected depending on the lifetime of the switching elements of the inverter.

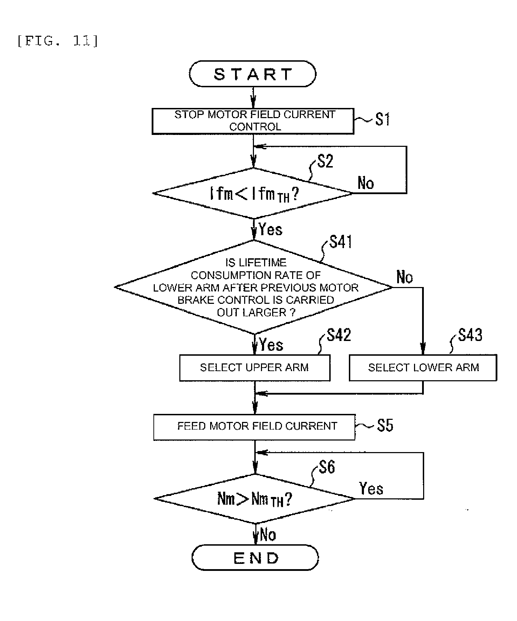

FIG. 11 is a flow chart showing a processing flow of a motor brake control process executed by the 4WD controller 8 in the fourth embodiment. In the figure, like reference numerals are used for designating like portions of the motor brake control process of the third embodiment shown in FIG. 10, and description will be given placing emphasis on the portions which are not found in the process of the first embodiment and the third embodiment.

In step S41, the 4WD controller 8 reads a lifetime consumption rate of each arm, which has been calculated in a lifetime consumption rate calculating process to be described later, and determines whether the lifetime consumption rate of the lower arm is larger than that of the upper arm after the previous motor brake control is carried out. When the lifetime consumption rate of the lower arm is larger than that of the upper arm, the controller advances to step S42 and executes the 3-phase short-circuiting mode based on the upper arm-on.

When the controller determines in the step S41 that the lifetime consumption rate of the upper arm is larger than that of the lower arm, the controller advances to step S43 and executes the 3-phase short-circuiting mode based on the lower arm-on. One of the upper arm and the lower arm is preset as an initial value of the selected arm. In this embodiment, the upper arm is set as the initial value.

Next, a method of calculating the lifetime consumption rate of the arm will be described.

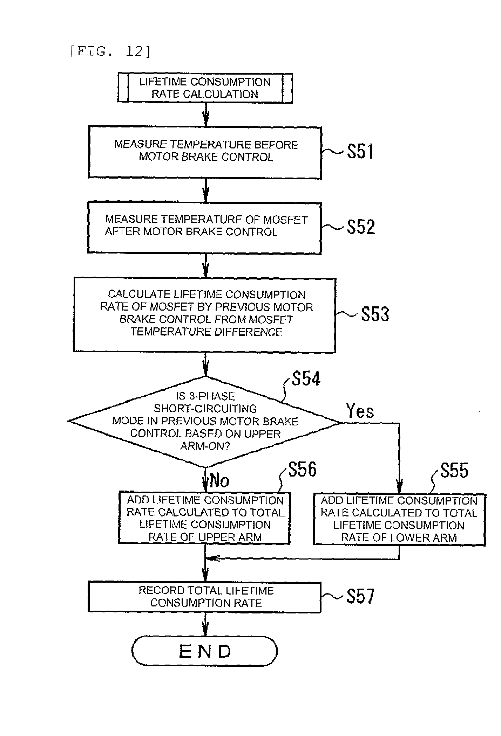

FIG. 12 is a flow chart showing a calculating flow of a process for calculating the lifetime consumption rates of the arms. The process of calculating the lifetime consumption rate is executed after the motor brake control. In step S51, the 4WD controller 8 reads temperatures of the switching elements of the upper and lower arms before the motor brake control and advances to step S52.

ln the step S52, 4WD controller 8 reads temperatures of the switching elements of the upper and lower arms after the motor brake control and advances to step S53.

In the step S53, the 4WD controller 8 calculates the lifetime consumption rates of the switching elements on the basis of a temperature difference of the switching elements before and after the motor brake control. The lifetime consumption rate is calculated by using an estimation table, pre-stored, of the switching element lifetime to the temperature rises of the switching elements.

In step S54, the 4WD controller 8 determines whether the 3-phase short-circuiting mode based on the lower arm-on in the previous motor brake control is performed. If the 3-phase short-circuiting mode based on the lower arm-on is performed, the controller advances to step S55. If the 3-phase short-circuiting mode based on the upper arm-on is performed, the controller advances to step S56.

ln step S55, the 4WD controller 8 adds the lifetime consumption rate calculated in step S53 to the total lifetime consumption rate of the lower arm, and advances to step S57.

In the step S56, the 4WD controller 8 adds the lifetime consumption rate calculated in the step S53 to the total lifetime consumption rate of the upper arm, and goes to step S57.

In step S57, the 4WD controller 8 records the total lifetime consumption rates of the upper and lower arms in the memory, and ends the lifetime consumption rate calculation process.

Operation of the fourth embodiment of the invention will be described.

It is assumed that the 4-wheel drive mode stop condition holds for the reason that, for example, no acceleration slip occurs in the front wheels. In this case, the 4WD controller 8 executes the motor brake control process shown in FIG. 11 and stops the motor field driving circuit in the step S1. The field reduction circuit is turned on to reduce the motor field current, and consequently, the motor field current Ifm gradually decreases.

When the motor field current Ifm becomes smaller than the motor field current-threshold value Ifm_{TH}, the controller turns on the switching elements Sx1 to Sx3 of the upper arm and turns off the switching elements Sx4 to Sx6 of the lower arm, and starts the 3-phase short-circuiting mode. At this time, the re-feeding of the motor field current increases the motor field current, which is based on motor brake torque (motor deceleration) in the 3-phase short-circuiting mode, to the target current value Ifm1. Subsequently, when the motor rotation speed Nm decreases to below the stop determining threshold value Nm_{TH}, the controller terminates the 3-phase short-circuiting mode on the basis of the determination in the step S6.

As the result of executing the 3-phase short-circuiting mode, the temperature of the switching elements Sx1 to Sx3 of the upper arm rises. The 4WD controller 8 calculates in step S53 of FIG. 12 a lifetime consumption rate against temperature variation of each of the switching elements Sx1 to Sx3 with reference to the pre-stored estimation table. The lifetime consumption rate is added to the total lifetime consumption rate of the upper arm, and the result is stored in the memory.

It is assumed that the vehicle operation state has shifted from this state to the 4-wheel drive mode and the 4-wheel drive mode stop condition holds again. If the lifetime consumption rate of the upper arm is larger that of the lower arm, the 4WD controller 8 determines that the answer to step S41 is NO, and goes to step S43 where the 3-phase short-circuiting mode starts in which the switching elements Sx4 to Sx6 of the lower arm are turned on, while the switching elements Sx1 to Sx3 of the upper arm are turned off.

Thus, when the 4-wheel drive mode stop condition holds, the motor 4 is caused to generate a braking force by executing the 3-phase short-circuiting command. The upper and lower arms are switched one from the other for the current-fed arm every time the motor brake control is performed. The current-fed arm is selected based on the lifetime consumption rates of the upper and lower arms.

Accordingly, the fourth embodiment employs a short-circuiting method in which one of the upper and lower arms of which the lifetime consumption rate is smaller than of the other is used for the current-fed arm. Accordingly, the arm including the switching elements having longer lifetimes is always used for the current fed arm. It is thus possible to level the total lifetime consumption rates of the upper and lower arms.

In the fourth embodiment, the temperature of the switching elements is measured by using the temperature sensors, and the lifetime consumption rates of the switching elements are calculated from temperature variations of the switching elements before and after the motor brake control is performed. In an alternative, the currents of the switching elements of the upper and lower arms may be measured by current sensors provided on those switching elements. The temperatures of the switching elements are estimated from the current values output from the current sensors. The lifetime consumption rates of the switching elements are calculated from the estimated values of temperature variations of the switching elements before and after the motor brake control is performed. This alternative is capable of properly calculating the lifetime consumption rates of both the upper and lower arms, as a matter of course.

In the fourth embodiment, in another alternative, the lifetime consumption rate may be calculated from a variation of the rotation speed of the motor before and after the motor brake control is performed. In this case as well, the lifetime consumption rates of the switching elements of the upper and lower arms can be properly calculated. Further, in this alternative, there is no need for use of temperature sensors. This feature brings about a reduction in cost of manufacture.

In some of the embodiments mentioned above, the temperatures of the switching elements are measured by using temperature sensors provided in the upper and lower arms. Alternatively, one temperature sensor may be located at a mid position between the switching elements of the upper and lower arms, so that the temperatures of the switching elements can be estimated from the value output from the temperature sensor. To estimate, the thermal characteristics of the switching elements to the temperature sensor values are tabulated in advance, whereby the temperatures of the switching elements of the upper and lower arms can be estimated in connection with the current fed thereto. This approach is also capable of properly estimating the temperatures of the switching elements of the upper and lower arms, and has a cost reduction advantage since only one temperature sensor is used.

In another approach, the temperature sensor is provided on one of the upper and lower arms. For one of the arms, temperatures of the switching elements actually measured by the temperature sensor are used for the temperatures of the switching elements. For the other arm, the temperatures of the switching elements are estimated on the basis of a thermal transfer model. This approach is also capable of properly measuring or estimating the temperatures of the switching elements of the upper and lower arms, and has a cost reduction advantage since only one temperature sensor is used.

In an additional approach, current sensors are provided for the switching elements of the upper and lower arms, respectively, to measure currents fed. The temperatures of the switching elements are estimated from the current sensor values. In this approach, the thermal characteristics of the temperature rise values of the switching elements to the currents fed are tabulated in advance. The approach also ensures proper estimation of the temperature of the switching elements of the upper and lower arms.

While the present invention has been described with reference to the accompanying drawings and by using the embodiments, it should be understood that those may readily be modified, altered and changed within the spirit and scope of the invention, as shown in the appended claims. For example, in the embodiments mentioned above, the upper arm and the lower arm are selected according to the rotation speed of the motor and the temperatures of the switching elements. Those arms may instead be selected according to an execution time of the 3-phase short-circuiting mode. In this case, times taken for the temperatures of the switching elements to reach predetermined values of temperature through the execution of the 3-phase short-circuiting mode are preset. The upper and lower arms are selected according to the preset times. Further, in the embodiments of the invention described above, the invention is incorporated into a battery-less system, which does not include a motor driving battery, and a system including a clutch for disconnecting a motor from the system. It is evident that the invention may be applied to the system having a motor driving battery and a system not using a clutch. Also, in the embodiments above, the AC motor is of the field winding type having a field winding and an armature winding. The AC motor may instead be of the magnetic type not having a field winding, as a matter of course.

This application claims priority from Japanese Patent Application No. 2006-073114, filed 16th March 2006, the contents of which are expressly incorporated by reference herein.

## Claims

1. An apparatus for controlling vehicle drive in a vehicle having a generator and a multi-phase AC motor for selectively driving auxiliary driven wheels; the vehicle drive control system comprising:
inverter means for supplying electric power to the AC motor from the generator, the inverter means having an upper arm comprising a first plurality of switching elements and a lower arm comprising a second plurality of switching elements; and
motor brake control means for controlling the inverter means to generate a braking force to decrease the rotation speed of the AC motor to a target rotation speed when a predetermined condition is met;
wherein the motor brake control means is arranged to selectively execute a first short-circuiting mode in which the first plurality of switching elements are simultaneously turned on and a second short-circuiting mode in which the second plurality of switching elements are simultaneously turned on.

2. An apparatus as claimed in claim 1, wherein the motor brake control means is arranged to switch the first short-circuiting mode and the second short-circuiting mode until the rotation speed of the AC motor reaches the target rotation speed.

3. An apparatus as claimed in claim 1 or claim 2, wherein the motor brake control means includes motor rotation speed detector means for detecting the rotation speed of the AC motor, the motor brake control means being arranged to switch between the first short-circuiting mode and the second short-circuiting mode when an amount of decrease in rotation speed of the AC motor reaches a predetermined amount of decrease.

4. An apparatus as claimed in claim 3, wherein the motor brake control means is arranged to set the predetermined amount of decrease on the basis of equal distribution of a difference between the current rotation speed and the target rotation speed.

5. An apparatus as claimed in any preceding claim, wherein the motor brake control means comprises temperature detection means for detecting and/or estimating temperatures of the switching elements of the inverter and wherein the motor brake control means is arranged to switch between the first short-circuiting mode and the second short-circuiting mode when the temperatures of the selected switching elements of the inverter reach a predetermined temperature.

6. An apparatus as claimed in any preceding claim, wherein the motor brake control means is arranged to select the first short-circuiting mode or the second short-circuiting mode when the predetermined condition is satisfied, and to execute the selected short-circuiting mode until the rotation speed of the AC motor reaches the target rotation speed.

7. An apparatus as claimed in any preceding claim, wherein the motor brake control means is arranged to select a short-circuiting mode different from the short-circuiting mode executed in the previous motor brake control.

8. An apparatus as claimed in any preceding claim, wherein the motor brake control means comprises:
temperature detection means for detecting or estimating temperatures of the switching elements of the inverter; and
lifetime estimating means for estimating lifetime consumption rates of the upper and lower arms of the inverter on the basis of the temperatures detected by the temperature detection means,
wherein the motor brake control means is arranged to select a short-circuiting mode in which the one of the first plurality of switching elements and the second plurality of switching elements having the smaller lifetime consumption rate as estimated by the lifetime estimating means are simultaneously turned on.

9. An apparatus as claimed in any preceding claim, wherein the motor brake control means comprises:
motor rotation speed detection means for detecting the rotation speed of the AC motor; and
lifetime estimating means for estimating the lifetime consumption rates of the upper and lower arms of the inverter on the basis of the rotation speed of the motor detected by the motor rotation speed detection means,
wherein the motor brake control means is arranged to select a short-circuiting mode in which the one of the first plurality of switching elements and the second plurality of switching elements having the smaller lifetime consumption rate as estimated by the lifetime estimating means are simultaneously turned on.

10. An apparatus as claimed in any preceding claim comprising a temperature sensor provided on at least one of the upper and lower arms of the inverter, optionally at a mid point therebetween.

11. An apparatus as claimed in any preceding claim comprising a current sensor for detecting current of at least one of the upper and lower arms of the inverter.

12. An apparatus as claimed in any preceding claim wherein the motor brake control means is arranged to control current in a field coil of the AC motor during motor brake control.

13. An apparatus for controlling a multi-phase AC motor by controlling an inverter connected to the AC motor, the apparatus comprising a motor brake control device for selectively executing a first short-circuiting mode in which switching elements of an upper arm of the inverter are simultaneously turned on and a second short-circuiting mode in which switching elements of a lower arm of the inverter are simultaneously turned on during motor brake control.

14. A method for drive control of a vehicle having an engine for driving main driving wheels, a generator driven by the engine, a multi-phase AC motor for selectively driving auxiliary driven wheels, and an inverter configured to supply electric power to the AC motor from the generator, the inverter having an upper arm comprising a first plurality of switching elements and a lower arm comprising a second plurality of switching elements, the method comprising:
detecting when a predetermined condition is met;
upon detection of the predetermined condition, selectively executing a first short-circuiting mode in which the first plurality of switching elements are simultaneously turned on and a second short-circuiting mode in which the second plurality of switching elements are simultaneously turned on; and
continuing the selective execution until the rotation speed of the AC motor decreases to a target rotation speed.

15. A vehicle having an apparatus or adapted to use a method as clai med in any preceding claim.
